**Europäisches Patentamt**

**European Patent Office**

**Office européen des brevets**

(19)

(11) Veröffentlichungsnummer : **0 243 524**
**B1**

(12) # EUROPÄISCHE PATENTSCHRIFT

(45) Veröffentlichungstag der Patentschrift :
28.09.88

(21) Anmeldenummer : 86105994.7

(22) Anmeldetag : 30.04.86

(51) Int. Cl.⁴ : **G 01 B  7/28**, G 01 B 21/20

(54) **Einrichtung zur Messung der Kreisformabweichung exzentrischer Lagerflächen, insbesondere von Pleuellagern.**

(43) Veröffentlichungstag der Anmeldung :
04.11.87 Patentblatt 87/45

(45) Bekanntmachung des Hinweises auf die Patenterteilung : 28.09.88 Patentblatt 88/39

(84) Benannte Vertragsstaaten :
AT BE CH FR GB IT LI LU NL SE

(56) Entgegenhaltungen :
DE-A- 3 046 708
DE-A- 3 147 424
DE-B- 1 128 000
DE-C-  745 686
GB-A- 2 085 156
US-A- 3 751 812
US-A- 4 517 717

(73) Patentinhaber : **Hommelwerke GmbH**
**Alte Tuttlinger Strasse 20**
**D-7730 VS-Schwenningen (DE)**

(72) Erfinder : **Hutter, Karl, Dipl.-Ing.**
**Ortholzweg 11**
**D-7730 VS-Mühlhausen (DE)**
Erfinder : **Wagner, Jacob, Dipl.-Ing.**
**Ortholzweg 13**
**D-7730 VS-Mühlhausen (DE)**

(74) Vertreter : **Leine, Sigurd, Dipl.-Ing. et al**
**LEINE & KÖNIG Patentanwälte Burckhardtstrasse 1**
**D-3000 Hannover 1 (DE)**

EP 0 243 524 B1

## Beschreibung

Die Erfindung betrifft eine Einrichtung der im Oberbegriff des Anspruchs 1 genannten Art zur Messung der Kreisformabweichung exzentrischer Lagerflächen, insb. von Pleuellagern.

Durch die DE-OS 3 147 424 ist eine Einrichtung der betreffenden Art bekannt, bei der der Längenmeßtaster von einem Schlitten gehalten ist, der die seitliche Beweglichkeit des Längenmeßtasters ermöglicht, wobei die seitliche Nachführung des Schlittens und damit des Längenmeßtasters durch eine Antriebseinrichtung zwangsgesteuert ist, die eine sinusförmige Bewegung ausführt, deren Amplitude und Phase in bezug zu der Drehlage der exzentrischen Lagerfläche einstellbar sind. Diese bekannte Einrichtung hat den Nachteil, daß die Einrichtung zur Erzeugung der Zwangssteuerung verhältnismäßig kompliziert und nur schwer genau einzustellen ist, so daß immer ein Restfehler verbleibt, der den gemessenen Radialwerten und damit dem Rundheitsverlauf der gemessenen Lagerfläche überlagert ist.

Durch den Prospekt der Firma Adcole Corporation, Waltham, Massachusetts, USA, betreffend die Modelle 910, 1 200 und 1 300 dieser Firma ist eine Einrichtung zur Messung der Kreisformabweichung exzentrischer Lagerflächen bekannt, bei der sich am Ende des Meßstößels eine lange Meßschneide befindet, die tangential auf der zu messenden, exzentrischen Lagerfläche aufliegt, wobei der Auflagepunkt bei Drehung der Kurbelwelle hin- und herwandert. Der Nachteil dieser bekannten Einrichtung besteht darin, daß die Schneide entsprechend der Exzentrizität der zu messenden Lagerfläche verhältnismäßig lang, in hohem Maße gerade und darüber hinaus genau senkrecht zur Meßrichtung ausgerichtet sein muß. Diese Bedingungen erfordern einen großen Aufwand und sind niemals genau einzuhalten, so daß die verbleibenden Fehler mit in die Messung eingehen. Ein weiterer Nachteil ergibt sich durch die schnelle Abnutzung der Meßschneide aufgrund von Reibung.

Der Erfindung liegt die Aufgabe zugrunde, die Nachteile der bekannten Einrichtungen zu vermeiden und eine Einrichtung der betreffenden Art zu schaffen, die einfach im Aufbau und in der Bedienung ist und auch bei langem Gebrauch keine Fehler aufgrund von Abnutzung bewirkt.

Die der Erfindung zugrundeliegende Aufgabe wird durch die im Kennzeichen des Anspruchs 1 angegebene Lehre gelöst.

Der Grundgedanke dieser Lehre besteht darin, grundsätzlich keine tangential anliegende Schneide zu verwenden, statt dessen eine punktförmige Messung zu bewirken, wobei die aufgrund der Exzentrizität erforderliche seitliche Nachführung des Meßortes durch ein Nachführungsteil erfolgt, das an der zu messenden exzentrischen Lagerfläche unmittelbar anliegt. Die Nachführung erfolgt also durch die gemessene, exzentrische Lagerfläche selbst und nicht wie bei der bekannten Einrichtung durch eine komplizierte, fremdgesteuerte Nachführeinrichtung.

Nach der Lehre gemäß Anspruch 2 wird die seitliche Beweglichkeit des Längenmeßtasters zum Zwecke der Nachführung der Exzenterbewegung durch ein Schwenklager geschaffen, in bezug zu dem die Radialmessung erfolgt und das so genau hergestellt werden kann, daß Lagerfehler praktisch vernachlässigt werden können.

Eine andere Möglichkeit der Schaffung der seitlichen Beweglichkeit ist in Anspruch 8 angegeben. Bei dieser Ausführungsform ist es nicht erforderlich, Korrekturwerte aufgrund einer Schwenkbewegung der Meßrichtung einzuführen, da die Richtung der Messung immer gleich und immer parallel zur Stößelrichtung gerichtet ist. Unter Längenmeßtaster wird bei dieser Ausführungsform jede Art einer Anordnung verstanden, die eine Meßbewegung in Radialrichtung und eine Nachführbewegung in Tangentialrichtung ermöglicht. Soll bei dieser Ausführungsform ein besonders hoher Grad einer Meßgenauigkeit erzielt werden, so ist es zweckmäßig, gemäß einer Weiterbildung dieser Ausführungsform Ungenauigkeiten in den Führungen durch besondere Mittel festzustellen und entsprechende Korrekturgrößen in den Meßwert einzuführen. Dabei ist es besonders zweckmäßig, optische Fehlermeßvorrichtungen zu verwenden, die mit Laserstrahlen und Detektoren arbeiten, die Auslenkungen der Laserstrahlen in bezug zu den Detektoren feststellen und entsprechende elektrische Korrekturwerte erzeugen.

Anhand der Zeichnung soll die Erfindung näher erläutert werden.

Fig. 1 zeigt schematisch ein erstes Ausführungsbeispiel der Erfindung in einem Schnitt senkrecht zur Drehachse einer zu messenden Lagerfläche,

Fig. 2 ist eine verkleinerte Draufsicht auf die Fig. 1,

Fig. 3 zeigt eine Abwandlung der Ausführungsform gemäß Fig. 1 in gleicher Darstellungsweise, und

Fig. 4 zeigt ein anderes Ausführungsbeispiel der Erfindung.

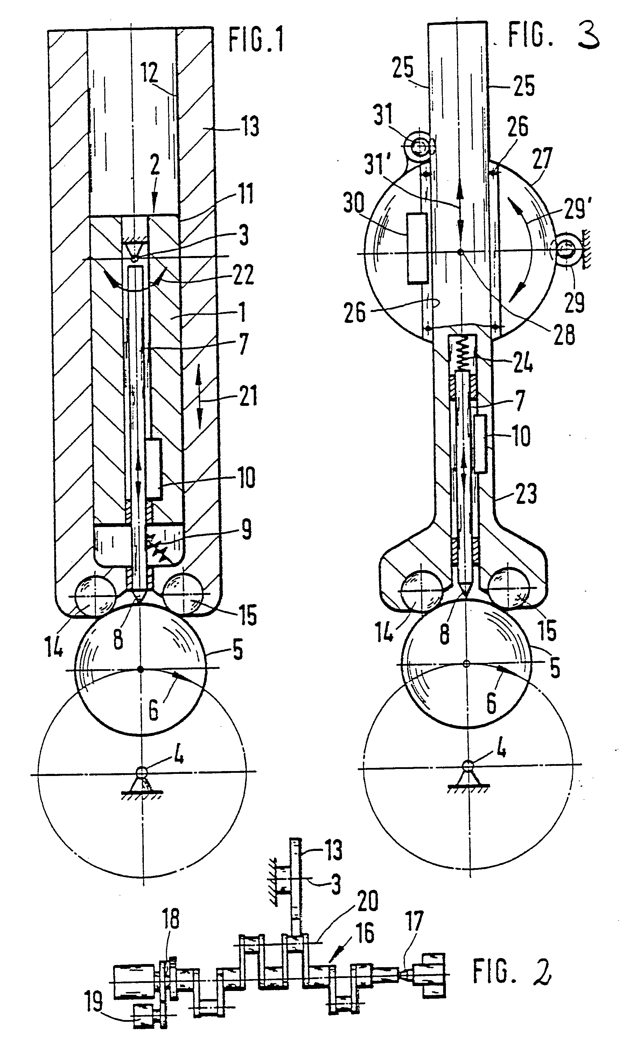

In Fig. 1 ist ein Gehäuse 1 eines Längenmeßtasters 2 mittels eines hochgenauen, ortsfesten Schwenklagers 3 verschwenkbar gehalten, dessen Achse parallel zur Achse eines Drehlagers 4 verläuft, um das exzentrisch eine Lagerfläche 5 in Richtung eines Pfeiles 6 drehbar ist. Bei der Lagerfläche 5 kann es sich z. B. um die Lagerfläche für ein Pleuellager einer Kurbelwelle handeln.

In dem Gehäuse 1 ist vertikal beweglich ein Stößel 7 gelagert, der mit seiner Tastspitze 8 auf der exzentrischen und zylindrischen Lagerfläche 5 aufliegt und mittels einer Feder 9 in Auflagekontakt gehalten wird. Der Stößel 7 wirkt mit einem mechanisch/elektrischen Wandler 10 zusammen, der ein elektrisches Wechselspannungssignal abgibt, das den Auslenkungen des Stößels 7 proportional ist.

Die Außenfläche des Gehäuses 1 bildet eine äußere Führungsfläche 11, die zusammen mit einer inneren Führungsfläche 12 eines Nachführteils 13 eine lineare Führung bildet, so daß das Nachführteil 13 leicht beweglich in im wesentlichen lotrechter Richtung geführt ist. Am unteren Ende des Nachführteils 13 befinden sich in Umfangsrichtung der Lagerfläche 5 im Abstand zueinander zu beiden Seiten der Tastspitze 8 Rollen 14 und 15, mit denen das Nachführteil 13 auf der Lagerfläche 5 aufruht.

Fig. 2 zeigt verkleinert und in Übersicht die Anordnung der Einrichtung gemäß Fig. 1 bei der Messung einer Kurbelwelle 16, die zwischen zwei Spitzen 17 und 18 eingespannt und durch einen Motor 19 drehbar ist. Das Führungsteil 13 liegt auf der exzentrischen Lagerfläche 5, also der Pleuellagerfläche, auf. Die Achse des Schwenklagers 3 verläuft parallel zu der Achse des Drehlagers 4.

Bei einer Messung wird die Kurbelwelle 16 mit seiner exzentrischen Lagerfläche 5 um das Drehlager 4 durch den Motor 19 langsam gedreht, so daß eine Drehachse 20 der Lagerfläche 5 in Richtung des Pfeiles 6 um das Drehlager 4 wandert. Aufgrund des Gewichts liegt das Führungsteil 13 aufgrund seiner Beweglichkeit in Richtung eines Doppelpfeiles 21 mit seinen Rollen 14 und 15 ständig auf der Lagerfläche 5 auf, so daß dadurch gleichzeitig eine seitliche Schwenkbewegung des Nachführteils 13 in Richtung eines Doppelpfeiles 22 um das Schwenklager 3 erfolgt und damit auch eine entsprechende Schwenkbewegung des Längenmeßtasters 2. Der Stößel 7 tastet dabei die Radialwerte der Lagerfläche 5 in bezug zu dem Schwenklager 3 ab, die aufgezeichnet und bezüglich der Rundheit der Lagerfläche 5 analysiert werden können.

Fig. 3 zeigt eine Abwandlung der Ausführungsform gemäß Fig. 1 in entsprechender Darstellung. Übereinstimmende oder sich entsprechende Teile sind mit gleichen Bezugsziffern versehen. Bei dieser Ausführungsform fehlt das Gehäuse 1 der Ausführungsform gemäß Fig. 1, der mechanisch/elektrische Wandler 10 ist unmittelbar in einem Führungsteil 23 angeordnet, in dem auch der Stößel 7 verschieblich gelagert ist, der durch eine Feder 24 in Tastrichtung belastet ist.

Das Führungsteil 23 weist äußere Führungsflächen 25 auf, die zwischen inneren Führungsflächen 26 linear verschieblich geführt und gehalten sind, die sich an einer Scheibe 27 befinden, die um eine Schwenkachse 28 in Richtung eines Doppelpfeiles 29' verschwenkbar gelagert ist, wobei die Winkelstellung durch einen Winkelgeber 29 abgetastet wird. An der Scheibe 27 befindet sich ein mechanisch/elektrischer Wandler 30, der die Bewegungen des Führungsteils 23 in Richtung eines Doppelpfeiles 31' abtastet und ein entsprechendes elektrisches Ausgangssignal erzeugt, wobei der Andruck insbesondere bei horizontaler Lage der Einrichtung durch einen Motor 31 bewirkt wird.

Bei Messung bewirkt wieder die Auflage der Rollen 14 und 15 eine seitliche Auslenkung und Nachführung der Tastspitze 8, die sich relativ zu dem Führungsteil 23 bewegt, so daß der mechanisch/elektrische Wandler 10 ein entsprechendes Ausgangssignal abgibt. Dieses Ausgangssignal ist jedoch von der Auflage der Rollen 14 und 15 und damit auch indirekt von der Unrundheit der Lagerfläche 5 beeinflußt. Die radiale Lage dieser Auflagepunkte wird jedoch durch den mechanisch/elektrischen Längenmeßtaster 30 festgestellt, der ein entsprechendes Ausgangssignal abgibt, das bei Hinzufügung zu dem Ausgangssignal des mechanisch/elektrischen Längenmeßtasters 10 einen Summenwert ergibt, der dem Abstand der Tastspitze 8 in bezug zu der Schwenkachse 28 entspricht. Diese Ausführungsform gemäß Fig. 3 hat den Vorteil, daß die Auslenkungen des Stößels 7 nur gering zu sein brauchen, der daher entsprechend empfindlich ausgebildet werden kann, so daß er auch feinen Änderungen der Unrundheit folgen kann.

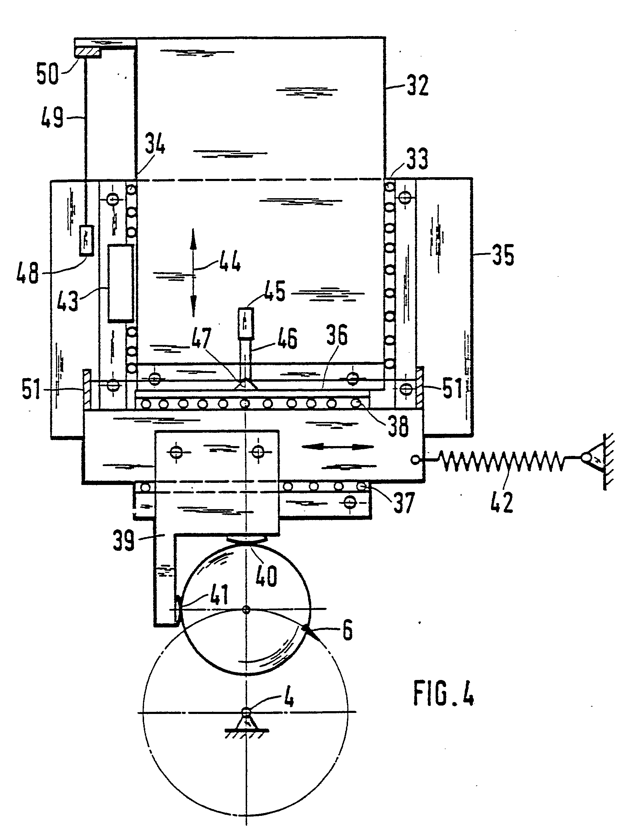

Bei dem in Fig. 4 dargestellten Ausführungsbeispiel ist ein Nachführteil 32 durch mit Kugeln versehene lineare Führungen 33 und 34 an einem ortsfesten Teil 35 geführt und gehalten. An einem Tastende 36 des Nachführteils 32 befinden sich zwei mit Kugeln versehene lineare Führungen 37 und 38 für ein Tastteil 39, das mit einer Tastkante 40 aufgrund des Gewichts im wesentlichen des Nachführteils 32 auf der Lagerfläche 5 aufliegt, während eine Führungskante 41 seitlich an der Lagerfläche 5 anliegt, wobei die Anlage durch eine Zugfeder 42 bewirkt wird.

An dem ortsfesten Teil 35 befindet sich ein mechanischelektrischer Längenmeßtaster 43, der die Bewegungen des Nachführteils 32 in Richtung eines Doppelpfeiles 44 abtastet und ein entsprechendes elektrisches Signal abgibt, das im Ergebnis den Bewegungen der Tastkante 40 entspricht und aus dem unter Berücksichtigung des Kurbelradius zwischen dem Drehlager 4 und der Drehachse 20 die Radialwerte der Lagerfläche 5 ermittelt werden können.

An dem Nachführteil 32 befindet sich ein Laser 45, dessen Strahlen 46 über ein Prisma 47 an dem Nachführteil 32 auf positionsempfindliche Detektoren 51 fallen, die fest mit dem Tastteil 39 verbunden sind und Signale abgeben, die den Führungsfehlern in den Führungen 37 und 38 entsprechen.

An dem ortsfesten Teil 35 ist außerdem ein Laser 48 befestigt, dessen Strahl 49 auf einen positionsempfindlichen Detektor 50 fällt, der ein Signal abgibt, das Bewegungen des Nachführteils 32 aufgrund von Fehlern in den Führungen 33 und 34 entspricht. Die Ausgangssignale der Detektoren 51 und 50 können daher zur Korrektur der gemessenen Radialwerte dienen, so daß das Gesamtsignal fehlerfrei ist.

**Patentansprüche**

1. Einrichtung zur Messung der Kreisformabweichung exzentrischer Lagerflächen, insbesondere von Pleuellagern, mit einem Längenmeßtaster, der radial zu der exzentrischen Lagerfläche gerichtet und im wesentlichen quer zu dieser radialen Richtung und quer zu der Drehachse der radialen Lagerfläche seitlich beweglich gehalten ist, und mit Mitteln zur Nachführung des Längenmeßtasters in Richtung seiner Beweglichkeit entsprechend der Bewegung der exzentrischen Lagerfläche in dieser Richtung bei Drehung, dadurch gekennzeichnet, daß die Mittel zur Nachführung ein Nachführteil (13) aufweisen, das in radialer Richtung der exzentrischen Lagerfläche (5) beweglich gehalten ist und zwei Anlagespitzen oder Anlagekanten (14, 15) aufweist, die in Umfangsrichtung der zu messenden exzentrischen Lagerfläche (5) im Abstand zueinander angeordnet sind, daß Andruckmittel (9) zum Andrücken der Anlagespitzen oder Anlagekanten (14, 15) an die exzentrische Lagerfläche (5) vorgesehen sind, und daß das Nachführteil (13) in Richtung der seitlichen Beweglichkeit des Längenmeßtasters (2) mit diesem gekoppelt ist.

2. Einrichtung nach Anspruch 1, dadurch gekennzeichnet, daß einer oder mehrere Längenmeßtaster (2) drehbeweglich von einem Schwenklager (3) gehalten sind, dessen Schwenkachse entfernt von dem Meßort und parallel zu der Drehachse (20) der exzentrischen Lagerfläche (5) verläuft, und daß die Kopplung zwischen dem Längenmeßtaster (2) und dem Nachführteil (13) aus einer linearen Führung (11, 12) besteht, die parallel zur Meßrichtung gerichtet ist.

3. Einrichtung nach Anspruch 1, dadurch gekennzeichnet, daß die Andruckmittel eine Feder (9) oder einen Motor (31) aufweisen.

4. Einrichtung nach Anspruch 2, dadurch gekennzeichnet, daß die lineare Führung (11, 12) im wesentlichen lotrecht verläuft, derart, daß das Nachführteil (13) mit seinen Anlagespitzen oder Anlagekanten (14, 15) durch sein Gewicht gegen die zu messende exzentrische Lagerfläche (5) drückt.

5. Einrichtung nach Anspruch 1, dadurch gekennzeichnet, daß die Anlagekanten durch zwei Rollen (14, 15) gebildet sind, deren Achsen parallel zur Drehachse (20) der zu messenden exzentrischen Lagerfläche (5) verlaufen.

6. Einrichtung nach Anspruch 1, dadurch gekennzeichnet, daß der Längenmeßtaster (2) innerhalb des Nachführteils (13) angeordnet ist.

7. Einrichtung nach Anspruch 1, dadurch gekennzeichnet, daß einer oder mehrere Längenmeßtaster fest mit dem Nachführteil (23) verbunden sind, welches in einer linearen, in Meßrichtung gerichteten Führung (25, 26) verschieblich und mittels eines Schwenklagers verschwenkbar gehalten ist, dessen Schwenkachse (28) entfernt von dem Meßort und parallel zu der Drehachse (20) der exzentrischen Lagerfläche (5) verläuft, und daß ein zweiter Längenmeßtaster (30) vorgesehen ist, der die Bewegungen des Nachführteils (23) abtastet, derart, daß die Summe der Meßwerte der beiden Längenmeßtaster (10, 30) den jeweiligen Radialwert der exzentrischen Lagerfläche (5) bezogen auf die Schwenkachse (28) enthält.

8. Einrichtung nach Anspruch 1, dadurch gekennzeichnet, daß das Nachführteil (32) durch den Stößel des mechanischen Längenmeßtasters (43) gebildet ist, an dessen Tastende (36) sich eine lineare Führung (37, 38) befindet, die quer zur Meßrichtung und quer zur Drehachse (20) der exzentrischen Lagerfläche (5) gerichtet ist und ein Tastteil (39) beweglich hält, das die beiden Anlagespitzen oder Anlagekanten (40, 41) aufweist, von denen eine die Tastspitze oder Tastkante (40) des Längenmeßtasters (2) bildet.

9. Einrichtung nach Anspruch 8, dadurch gekennzeichnet, daß Mittel zur Fehlermessung von Quer- und/oder Kippbewegungen der Führungen (33, 34) des Stößels (32) des Längenmeßtasters (32, 43) und/oder der Quer- und/oder Kippbewegungen der linearen Führung (37, 38) am Tastende (36) des Stößels (32) vorgesehen sind.

10. Einrichtung nach Anspruch 9, dadurch gekennzeichnet, daß die Mittel zur Fehlermessung jeweils einen an dem einen Teil (32, 35) der Führungen (33, 34) angeordneten Laser (45, 48) aufweisen, dessen Strahl auf Fotodetektoren (50, 51) gerichtet ist, die sich an dem anderen Teil (39, 32) der Führung befinden und bei Auswandern des von dem Strahl (46, 49) des Lasers (45, 48) erzeugten Lichtflecks auf den Fotodetektoren (50, 51) ein Korrektursignal erzeugen.

## Claims

1. A device for the measurement of the deviation from a circular shape of eccentric bearing surfaces, in particular of connecting-rod bearings, having a length measuring gauge which is directed radially to the eccentric bearing surface and supported to be able to move sideways, essentially transversely to that radial direction and transversely to the axis of rotation of the radial bearing surface, and having means of following the length measuring gauge in the direction of its mobility to correspond with the motion of the eccentric bearing surface in this direction during turning, characterized in that the means of following exhibit a follower part (13) which is supported to be able to move in the direction radial to the eccentric bearing surface (5) and exhibits two contact points or contact edges (14, 15) which are arranged at a distance apart in the direction circumferential to the eccentric bearing surface (5) which is to be measured, that pressure means (9) are provided for pressing the contact points or contact edges (14, 15) against the eccentric bearing surface (5), and that the follower part (13) is coupled to the length measuring gauge (2) in the direction of the sideways mobility of the latter.

2. A device as in Claim 1, characterized in that one or more length measuring gauges (2) are supported to be able to move in rotation by a swivel bearing (3) the swivel axis of which runs at a distance from the place of measurement and parallel with the axis of rotation (20) of the eccentric bearing surface (5), and that the coupling between the length measuring gauge (2) and the follower part (13) consists of a linear guide (11, 12) which is directed in parallel with the direction of measurement.

3. A device as in Claim 1, characterized in that the pressure means exhibit a spring (9) or a motor (31).

4. A device as in Claim 2, characterized in that the linear guide (11, 12) runs essentially vertically in such a way that the follower part (13) presses by its contact points or contact edges (14, 15) through its own weight against the eccentric bearing surface (5) which is to be measured.

5. A device as in Claim 1, characterized in that the contact edges are formed by two rollers (14, 15) the axes of which run in parallel with the axis of rotation (20) of the eccentric bearing surface (5) which is to be measured.

6. A device as in Claim 1, characterized in that the length measuring gauge (2) is arranged inside the follower part (13).

7. A device as in Claim 1, characterized in that one or more length measuring gauges are connected rigidly to the follower part (23) which is able to shift in a linear guide (25, 26) directed in the direction of measurement and is supported pivotally by a swivel bearing the swivel axis (28) of which runs at a distance from the place of measurement and parallel with the axis of rotation (20) of the eccentric bearing surface (5), and that a second length measuring gauge (30) is provided, which senses the movements of the follower part (23) in such a way that the sum of the measured values from the two length measuring gauges (10, 30) contains the radial value at the time. of the eccentric bearing surface (5) referred to the swivel axis (28).

8. A device as in Claim 1, characterized in that the follower part (32) is formed by the plunger of the mechanical length measuring gauge (43), at the feeler end (36) of which lies a linear guide (37, 38) which is directed transversely to the direction of measurement and transversely to the axis of rotation (20) of the eccentric bearing surface (5) and supports movably a feeler part (39) which exhibits the two contact points or contact edges (40, 41), one of which forms the feeler point or feeler edge (40) of the length measuring gauge (2),

9. A device as in Claim 8, characterized in that means are provided for measurement of error from transverse and/or tilting movements of the guides (33, 34) of the plunger (32) of the length measuring gauge (32, 43) and/or from the transverse and/or tilting movements of the linear guide (37, 38) at the feeler end (36) of the plunger (32).

10. A device as in Claim 8, characterized in that the means of measurement of error exhibit in each case a laser arranged on the one part (32, 35) of the guides (33, 34), the beam from which is directed at photoelectric detectors (50, 51) which are lying on the other part of the guide, and which upon shifting of the light spot generated by the beam (46, 49) from the laser (45, 48) upon the photoelectric detectors (50, 51), generate a correcting signal.

## Revendications

1. Appareil pour mesurer la déviation circulaire de surfaces de paliers excentriques, notamment de paliers de bielles, comportant un palpeur de mesure de longueur, qui est orienté radialement par rapport à la surface de palier excentrique et qui est maintenu de façon à pouvoir se déplacer latéralement sensiblement perpendiculairement à cette direction radiale et perpendiculairement à l'axe de rotation de la surface de palier radiale, ainsi que des moyens pour un guidage contrôlé du palpeur de mesure de longueur dans la direction de sa mobilité en correspondance aux mouvements de la surface de palier excentrique dans cette direction lors de la rotation, caractérisé en ce que les moyens de guidage contrôlé comprennent une partie de guidage contrôlé (13), qui est maintenue mobile dans une direction radiale de la surface de palier excentrique (5) et qui comporte deux pointes d'appui ou arêtes d'appui (14, 15), qui sont disposées à distance l'une de l'autre dans la direction périphérique de la surface de palier excentrique (5) à mesurer, en ce qu'il est prévu des moyens d'application (9) pour appliquer les pointes d'appui ou arêtes d'appui (14, 15) contre la surface de palier excentrique (5) et en ce que la partie de guidage contrôlé (13) est accouplée, dans la direction de mobilité latérale du palpeur de mesure de longueur (2), avec celui-ci.

2. Appareil selon la revendication 1, caractérisé en ce qu'un ou plusieurs palpeurs de mesure de longueur (2) sont maintenus avec possibilité de rotation par un palier de pivotement (3) dont l'axe de pivotement est éloigné de l'endroit de mesure et est orienté parallèlement à l'axe de rotation (20) de la surface de palier excentrique (5), et en ce que l'accouplement entre le palpeur de mesure de longueur (2) et la partie de guidage contrôlé (13) se compose d'un guide linéaire (11, 12), qui est orienté parallèlement à la direction de mesure.

3. Appareil selon la revendication 1, caractérisé en ce que les moyens d'application comportent un ressort (9) ou un moteur (31).

4. Appareil selon la revendication 2, caractérisé en ce que le guide linéaire (11, 12) est orienté sensiblement verticalement de telle sorte que la partie de guidage contrôlé (13) s'appuie par ses pointes d'application ou arêtes d'application (14, 15) et sous l'effet de son poids contre la surface de palier excentrique (5) à mesurer.

5. Appareil selon la revendication 1, caractérisé en ce que les arêtes d'application sont constituées par deux rouleaux (14, 15) dont les axes sont orientés parallèlement à l'axe de rotation (20) de la surface de palier excentrique (5) à mesurer.

6. Appareil selon la revendication 1, caractérisé en ce que le palpeur de mesure de longueur (2) est disposé à l'intérieur de la partie de guidage contrôlé (13).

7. Appareil selon la revendication 1, caractérisé en ce qu'un ou plusieurs palpeurs de mesure de longueur sont reliés rigidement avec la partie de guidage contrôlé (23), qui est montée avec possibilité de translation dans un guide linéaire (25, 26) orienté dans la direction de mesure, et avec possibilité de pivotement au moyen d'un palier de pivotement, dont l'axe de pivotement (28) est éloigné de l'endroit de mesure et est orienté parallèlement à l'axe de rotation (20) de la surface de palier excentrique (5), et en ce qu'il est prévu un second palpeur de mesure de longueur (30), qui palpe les mouvements de la partie de guidage contrôlé (23) de telle sorte que la somme des valeurs de mesures des deux palpeurs de mesure de longueur (10, 30) contiennent la valeur radiale correspondante de la surface de palier excentrique (5) par rapport à l'axe de pivotement (28).

8. Appareil selon la revendication 1, caractérisé en ce que la partie de guidage contrôlé (32) est constituée par le poussoir du palpeur mécanique de mesure de longueur (43), à l'extrémité de palpage (36) duquel il est prévu un guide linéaire (37, 38), qui est orienté perpendiculairement à la direction de mesure et perpendiculairement à l'axe de rotation (20) de la surface de palier excentrique (5) et qui maintient avec possibilité de déplacement une partie de palpage (39) qui comporte les deux pointes d'application ou arêtes d'application (40, 41), dont l'une constitue la pointe de palpage ou arête de palpage (40) du palpeur de mesure de longueur (2).

9. Appareil selon la revendication 8, caractérisé en ce qu'il est prévu des moyens pour une mesure d'erreur dans des mouvements transversaux et/ou des mouvements de basculements des guides (33, 34) du poussoir (32) du palpeur de mesure de longueur (32, 43) et/ou dans des mouvements transversaux et/ou des mouvements de basculement du guide linéaire (37, 38) à l'extrémité de palpage (36) du poussoir (32).

10. Appareil selon la revendication 9, caractérisé en ce que les moyens de mesure d'erreur comportent respectivement un laser (45, 48) disposé sur une des parties (32, 35) des guides (33, 34) et dont le rayon est dirigé vers des photodétecteurs (50, 51), qui sont situés sur l'autre partie (39, 32) du guide et qui produisent un signal de correction lors d'une déviation du spot lumineux, engendré par le rayon (46, 49) du laser (45, 48), sur les photodétecteurs (50, 51).

FIG.1

FIG. 3

FIG. 2

FIG.4